# EUROPEAN PATENT APPLICATION

(11) **EP 4 742 736 A1**
(43) Date of publication of application: **13.05.2026**
(21) Application number: 23944344.3
(22) Date of filing: 05.07.2023
(51) Int. Cl.: H04W 24/10, H04W 72/23

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2023/024918
(87) International publication number: WO 2025/009092

(57) **Abstract**

A terminal according to one aspect of the present disclosure includes a receiving section that receives a configuration of a plurality of channel state information (CSI)-reference signal (RS) resources, and a control section that measures the plurality of CSI-RS resources by using more than 32 CSI-RS ports. The plurality of CSI-RS resources are associated with 32 or less different CSI-RS ports.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a terminal (User Equipment (UE)) controls transmission and reception processing, based on information related to quasi-co-location (QCL, a Transmission Configuration Indication (TCI) state, a beam).

However, when many periodic/semi-persistent channel state information-reference signals (CSI-RSs) are configured for management of many beams, resource use efficiency is reduced, and reduction in throughput and the like may be caused.

In view of this, the present disclosure has one object to provide a terminal, a radio communication method, and a base station that efficiently use CSI-RS resources.

### Solution to Problem

A terminal according to one aspect of the present disclosure includes a receiving section that receives a configuration of a plurality of channel state information (CSI)-reference signal (RS) resources, and a control section that measures the plurality of CSI-RS resources by using more than 32 CSI-RS ports. The plurality of CSI-RS resources are associated with 32 or less different CSI-RS ports.

### Advantageous Effects of Invention

According to one aspect of the present disclosure, CSI-RS resources can be efficiently used.

### Brief Description of Drawings

[FIG. 1] FIG. 1 is a diagram to show an example of CSI-RS locations in a slot.
[FIG. 2] FIG. 2A to FIG. 2D are diagrams to show examples of an FD-OCC and a TD-OCC.
[FIG. 3] FIG. 3 is a diagram to show an example of CSI-RS locations for each number of ports.
[FIG. 4] FIG. 4 is a diagram to show an example of mapping of a CSI-RS having 32 ports.
[FIG. 5] FIG. 5A and FIG. 5B are diagrams to show examples of the CSI-RS to which an inter-PRB OCC is applied.
[FIG. 6] FIG. 6A to FIG. 6C are diagrams to show examples of the inter-PRB OCC.
[FIG. 7] FIG. 7A and FIG. 7B are diagrams to show examples of overlapping of a previous-release CSI-RS and a new-release CSI-RS.
[FIG. 8] FIG. 8 is a diagram to show an example of CSI-RS measurement operation of a UE not configured with the inter-PRB OCC.
[FIG. 9] FIG. 9 is a diagram to show an example of the CSI-RS to which an inter-slot OCC is applied.
[FIG. 10] FIG. 10 is a diagram to show an example of legacy CSI-RS resources and additional CSI-RS resources.
[FIG. 11] FIG. 11 is a diagram to show an example of an additional OCC applied over the legacy CSI-RS resources and the additional CSI-RS resources.
[FIG. 12] FIG. 12 is a diagram to show an example of a case in which at least one of time and frequency is different between the legacy CSI-RS resources and the additional CSI-RS resources.
[FIG. 13] FIG. 13 is a diagram to show an example of a case in which at least one of a sequence and a scramble ID is different between the legacy CSI-RS resources and the additional CSI-RS resources.
[FIG. 14] FIG. 14 shows an example of beam application timing 1.
[FIG. 15] FIG. 15 shows an example of application timing of CSI-RS resources.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-Interference Measurement) (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.
- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A/AP-CSI) report, or a semi-persistent (semi-permanent) CSI (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire certain carrier (component carrier (CC), cell, serving cell), or may be the entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication i₁ may be reported for the entire CSI reporting band, and subband indication (one subband indication) i₂ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one parameter of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/Common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For example, one common beam (for example, common beam) being indicated by RRC/MAC CE/DCI may be supported, and the one common beam may be applied to a plurality of DL/UL channels/reference signals. For Rel. 18 or later versions, other cases may be supported.

In a joint DL/UL TCI state (for example, a Joint DL/UL TCI state), an RRC parameter (information element) configures a plurality of TCI states for both DL and UL. In the present disclosure, TCI states configured by the RRC parameter may be referred to as configured TCI states or configured TCI states (for example, configured TCI states). The MAC CE may activate a plurality of TCI states among the plurality of configured TCI states. DCI may indicate one of the plurality of activated TCI states. In the present disclosure, TCI states indicated by the DCI may be referred to as indicated TCI states or indicated TCI states (for example, Indicated TCI state).

The DCI may be UL DCI (for example, DCI used for scheduling of a PUSCH), or may be DL DCI (for example, DCI used for scheduling of a PDSCH). The indicated TCI state may be applied to at least one (or all) of UL/DL channels/RSs. One piece of DCI may indicate both a UL TCI and a DL TCI.

One indicated TCI state ID may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In a separate TCI state (for example, a Separate TCI (DL TCI state and UL TCI state)), an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

The joint TCI state and the separate (DL/UL) TCI state may be switched for application. Which is to be applied among the joint TCI state and the separate TCI state may be configured from the base station to the UE by a higher layer parameter, or may be switched by a TCI field (TCI state ID) in DCI.

A Rel-17 unified TCI framework supports modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

Note that the DCI in mode 2/mode 3 above may be referred to as beam indication DCI.

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified TCI state, a common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCCH (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state and a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC/MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, a legacy MAC CE/RACH signaling mechanism (legacy MAC CE/RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15) .

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For non-UE-dedicated channels/RSs (excluding CORESETs), whether each channel/resource/resource set follows an indicated Rel-17 TCI state may be configured by an RRC parameter. When the channel/resource/resource set is not configured to follow the indicated Rel-17 TCI state, a configured Rel-17 TCI state may be applied to the channel/resource/resource set.

### {Antenna Port QCL ... Physical Layer Procedure for Data}

The UE can be configured with a list of up to M TCI-States in a higher layer parameter PDSCH-Config for decoding a PDSCH in accordance with a detected PDCCH with DCI for the UE and a given serving cell. Here, M depends on a UE capability maxNumberConfiguredTCIstatesPerCC. Each TCI-State includes a parameter for a configuration of a QCL relationship between one or two downlink reference signals and a DM-RS port of a PDSCH, a DM-RS port of a PDCCH, or a CSI-RS port of a CSI-RS resource. The QCL relationship is configured by a higher layer parameter qcl-Type1 for a first DL RS and a higher layer parameter qcl-Type2 for a second DL RS (if configured). In a case of two DL RSs, the QCL type is not the same, regardless of whether the reference is the same DL RS or different DL RSs. The QCL type corresponding to each DL RS is given by a higher layer parameter qcl-Type in QCL-Info, and may have one of the following values:
- 'type A': {Doppler shift, Doppler spread, average delay, delay spread}
- 'type B': {Doppler shift, Doppler spread}
- 'type C': {Doppler shift, average delay}
- 'type D': {spatial Rx parameter}

To provide a reference signal for a PDSCH DMRS and a PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If there is no configuration of the TCI state (DL or joint TCI state (TCI-State) or the UL TCI state (TCI-UL-State)) in the BWP in the CC, the UE can apply a configuration of TCI-State or TCI-UL-State from a reference BWP of a reference CC. If the UE is configured with dl-OrJointTCI-StateList or TCI-UL-State in any one of the CCs in the same band, tci-StatesToAddModList (a TCI state list for additional change), SpatialRelationInfo (spatial relation information), and PUCCH-SpatialRelationInfo (PUCCH spatial relation information), except SpatialRelationInfoPos (spatial relation information for a position) in the band, are not expected to be configured. When the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial update list 1), or simultaneousSpatial-UpdatedList2-r16 (simultaneous spatial update list 2), the UE can assume that the UE is not configured with dl-OrJointTCI-StateList or TCI-UL-State in any CC in the same band in the CC list.

The UE receives an activation command used for mapping up to eight TCI states and/or up to eight TCI state pairs with one TCI state for a DL channel/signal and/or one TCI state for a UL channel/signal as described in a TCI states activation/deactivation for UE-specific PDSCH MAC CE or a unified TCI states activation/deactivation MAC CE in a MAC protocol specification to a codepoint of a DCI field 'Transmission Configuration Indication' for one or a set of CCs/DL BWPs and one or a set of CCs/UL BWPs if applicable.

When a set of TCI state IDs is activated for a set of CCs/DL BWPs and a set of CCs/UL BWPs if applicable, and an applicable list of CCs is determined by the CCs indicated in the activation command, the same set of TCI state IDs is applied to all the DL and/or UL BWPs in the indicated CCs.

If the activation command maps the TCI state (at least one of TCI-State and TCI-UL-State) to only one codepoint, and mapping indicated for the single TCI codepoint is applied as described in a requirement (MAC CE based DL TCI state switching delay/MAC CE based UL TCI state switching delay) for supporting radio resource management (RRM), the UE applies the indicated TCI state (at least one of TCI-State and TCI-UL-State) to one or a set of CCs/DL BWPs and one or a set of CCs/UL BWPs, if applicable.

When bwp-id or a cell for a QCL type A/D source RS in QCL-Info of the TCI state is not configured, the UE assumes that the QCL type A/D source RS is configured in a CC/DL BWP to which the TCI state is applied.

When the CORESET is configured with the presence of the TCI field in DCI (configured with tci-PresentInDCI set to 'enabled' or tci-PresentDCI-1-2), the UE configured with the list of DL or joint TCI states (dl-OrJointTCI-StateList) with the activated TCI state (TCI-State or TCI-UL-State) receives DCI format 1_1/1_2 providing the indicated TCI state (at least one of TCI-State and TCI-UL-State) for one CC or for all the CCs in the same CC list configured by the simultaneous unified TCI update list (simultaneousU-TCI-UpdateList1-r17, simultaneousU-TCI-UpdateList2-r17, simultaneousU-TCI-UpdateList3-r17, simultaneousU-TCI-UpdateList4-r17). If DL assignment is available, the DCI format 1_1/1_2 may be accompanied by the DL assignment, or may not be accompanied by the DL assignment.

If DCI format 1_1/1_2 is not accompanied by DL assignment, the UE can assume (validate) the following.
- A CS-RNTI is used to scramble a CRC for the DCI.
- Values of the following DCI fields (special fields) are set as follows:
   - Redundancy version (RV) fields are all '1's.
   - Modulation and coding scheme (MCS) fields are all '1's.
   - A new data indicator (NDI) field is 0.
   - Frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

If the UE receives a higher layer configuration of dl-OrJointTCI-StateList with single TCI-State that can be used as the indicated TCI state, the UE obtains QCL assumption from the configured TCI state for a DM-RS of a PDSCH, a DM-RS of a PDCCH, and a CSI-RS to which the indicated TCI state is to be applied.

If the UE receives the higher layer configuration of dl-OrJointTCI-StateList with single TCI-State or single TCI-UL-State that can be used as the indicated TCI state, the UE determines a UL TX spatial filter from the configured TCI state, if applicable, for a dynamic grant based and configured grant based PUSCH, a PUCCH, and an SRS to which the indicated TCI state is to be applied.

When the UE configured with the list of DL or joint TCI states (dl-OrJointTCI-StateList) is to transmit a PUCCH with a positive HARQ-ACK or a PUSCH with a positive HARQ-ACK corresponding to DCI transmitting the TCI state indication and without DL assignment or corresponding to a PDSCH scheduled by DCI transmitting the TCI state indication, and the indicated TCI state is different from the indicated TCI state that is previously indicated, the indicated TCI state (at least one of indicated TCI-State and indicated TCI-UL-State) starts to be applied from a first slot (beam application timing 1) that is at least beamAppTime symbols (beam application time (BAT)) after the last symbol of the PUCCH or the PUSCH. Both of the first slot and the beamAppTime symbols are determined on an active BWP with the smallest SCS in the BWP from the CC to which the indicated TCI state (at least one of indicated TCI-State and indicated TCI-UL-State) being active at the end of the end of the PUCCH or the PUSCH transmitting the positive HARQ-ACK is applied.

### {DCI Format 1_1 ... Multiplexing and Channel Coding}

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

A TCI state ID indicating a joint DL/UL TCI state is associated with a TCI field value for the joint DL/UL TCI state indication.

At least one of a TCI state ID indicating a DL-only TCI state and a TCI state ID indicating a UL-only TCI state is associated with a TCI field value for the separate DL/UL TCI state indication. For example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### {Active DL TCI State Switching Delay for Unified TCI State ... Requirement for Supporting of RRM}

A requirement of an active DL TCI state switching delay for the unified TCI state is applied to the UE configured with the configuration of the DL or joint TCI state (DLorJoint-TCIState) for a DL channel/signal on the serving cell. Furthermore, when all the serving cells in the lists of the serving cells in simultaneousU-TCI-UpdateList1, simultaneousU-TCI-UpdateList2, simultaneousU-TCI-UpdateList3, and simultaneousU-TCI-UpdateList4 in MR-DC or stand-alone NR are configured with the same serving cell and BWP in unifiedTCI-StateRef-r17, the requirement is also applied to all the lists. The UE completes switching of the active DL TCI state within a delay defined below.

### {{Known Condition for DL TCI State}}

When an RS resource for layer 1 (L1)-RSRP measurement is an RS in a target DL TCI state (a DL TCI state applied after switching, a DL TCI state indicated by a switching indication) or is QCLed with the target DL TCI state, and the following plurality of conditions are satisfied during a period from the last transmission of the RS resource used for an L1-RSRP measurement report for the target DL TCI state until completion of active DL TCI state switching, the DL TCI state is known:
- A DL TCI state switch command is received within 1280 ms from the last transmission of the RS resource for a beam report or measurement.
- Before the TCI state switch command, the UE has transmitted at least one L1-RSRP report for the target DL TCI state.
- During a period of the DL TCI state switching, the target DL TCI state remains detectable.
- During a period of the DL TCI state switching, the SSB associated with the DL TCI state remains detectable.

-- The SNR of the DL TCI state is equal to or larger than 3 dB.
-- The SSB can be associated with the serving cell PCI or a PCI different from the serving cell PCI.

When the conditions are not satisfied, the DL TCI state is unknown.

### {{MAC CE Based DL TCI State Switching Delay}}

The following requirement (beam application timing 2) is applied to DL TCI state switching using the separate DL TCI state or the joint TCI state of a unified TCI state switching framework.

When a source RS in the DL TCI state or the joint TCI state is associated with the PCI different from the PCI of the serving cell, and the cell with the different PCI satisfies the known cell conditions, the requirement is applied. If the known cell conditions are not satisfied, a longer delay is expected.

When a target PL-RS (a PL-RS applied after switching, a PL-RS corresponding to a target TCI state) is not maintained in a case of joint TCI state switching, the UE does not expect to receive the DL based on the target TCI state before the UE completes DL and UL TCI state switching.

If the target TCI state is known, in response to reception of the PDSCH for transmitting a MAC CE activation command in slot n, the UE can receive a UE-dedicated PDCCH/PDSCH with the target TCI state of the serving cell with occurrence of TCI state switching in a first slot after slot n + T_{HARQ} + 3Nₛₗₒₜ^{subframe,µ} + TOₖ * (T_{first-SSB} + T_{SSB-proc})/NR_slot_length (NR slot length) (beam application timing 2 when the target TCI state is known). The UE can receive the UE-dedicated PDCCH/PDSCH with an old TCI state (TCI state applied before switching) up to slot n + T_{HARQ} + 3Nₛₗₒₜ^{subframe,µ}. Here, T_{HARQ} (in units of slots) is time between DL data transmission and a confirmation response (acknowledgement).
- T_{first-SSB} is time until first SSB transmission after the MAC CE command is decoded by the UE. The SSB is of QCL type A or QCL type C for the target TCI state.
- T_{SSB-proc} = 2 ms
- TOₖ is 1 when the target TCI state is absent in an active TCI state list of the PDSCH/PDCCH, otherwise 0.

If the target TCI state is unknown, in response to reception of the PDSCH for transmitting a MAC CE activation command in slot n, the UE can receive a UE-dedicated PDCCH/PDSCH with the target TCI state of the serving cell with occurrence of TCI state switching in a first slot after slot n + T_{HARQ} + 3Nₛₗₒₜ^{subframe,µ} + (T_{L1- RSRP} + TOᵤₖ * (T_{first-SSB} + T_{SSB-proc}) /NR_slot_length (beam application timing 2 when the target TCI state is unknown). The UE can receive the UE-dedicated PDCCH/PDSCH by using an old TCI state up to slot n + T_{HARQ} + 3Nₛₗₒₜ^{subframe,µ}.
- In a case of FR1 or when the TCI state does not include QCL type D in FR2, T_{L1-RSRP} is 0, otherwise T_{L1-RSRP} is time for Rx beam refinement in FR2.
- For an SSB, T_{L1-RSRP} is defined as T_{L1-RSRP_Measurement_Period_SSB}, using assumption of M = 1 and T_{Report} = 0.
- For a CSI-RS, CSI-RS based L1-RSRP measurement is applied to the TCI state only when the source RS is associated with the serving cell, higher layer parameter repetition set to ON is configured, and assumption of M = 1 is used for a P-CSI-RS, and for an A-CSI-RS when the number of resources in a resource set is at least equal to MaxNumberRxBeam, T_{L1-RSRP} is defined as T_{L1-RSRP_Measurement_Period_CSI-RS}, using T_{Report} = 0.
- TOᵤₖ is 1 for CSI-RS based L1-RSRP measurement, and is 0 for SSB based L1-RSRP measurement when TCI state switching includes QCL type D.
- When TCI state switching includes QCL type D, T_{first-SSB} is time until first SSB transmission after L1-RSRP measurement.
- T_{first-SSB} is time until first SSB transmission after the MAC CE command is decoded by the UE for another QCL type.
- The SSB is of QCL type A or QCL type C for the target TCI state.

### {{DCI Based DL TCI State Switching Delay}}

When the UE is configured with a higher layer parameter with DLorJointTCIState or UL-TCIState, activated with the TCI state for DL transmission by a MAC CE indication of more than one codepoint, and receives DCI format 1_1/1_2 with or without DL assignment providing indicated TCI-State or an indicated TCI state pair in an active TCI list for a certain CC, the UE transmits the PUCCH with HARQ-ACK information corresponding to DCI for transmitting the TCI-State indication.

If the target TCI state is known, DL TCI switching to the indicated DL TCI state or the indicated joint TCI state in the DCI format is completed to start from a first slot that is at least BeamAppTime-r17 symbols after the last symbol of the PUCCH for transmitting a HARQ-ACK according to the DCI triggering TCI state activation. Both of the first slot and the BeamAppTime-r17 symbols are determined on the carrier with the smallest SCS in the carrier for applying the beam indication. The value of BeamAppTime-r17 is defined in a radio resource control (RRC) protocol specification. The "known conditions for the DL TCI state" described above are applied.

### {Active UL TCI State Switching Delay for Unified TCI State ... Requirement for Supporting of RRM}

The following requirement of an active UL TCI state switching delay for the unified TCI state is applied to the UE configured with a configuration of the DL or joint TCI state (DLorJoint-TCIState, when unifiedTCI-StateType is joint) or the UL TCI state (UL-TCIState) for a UL channel/signal on the serving cell. Furthermore, when all the serving cells in the lists of the serving cells in simultaneousU-TCI-UpdateList1, simultaneousU-TCI-UpdateList2, simultaneousU-TCI-UpdateList3, and simultaneousU-TCI-UpdateList4 in MR-DC or stand-alone NR are configured with the same serving cell and BWP in unifiedTCI-StateRef-r17, the requirement is also applied to all the lists. There is no requirement of a case in which the UE is required to perform switching to the TCI state with the higher layer parameter UL-TCIState associated with an SRS. When the UE is required to perform switching to the TCI state with the higher layer parameter DLorJoint-TCIState or UL-TCIState associated with a DL RS, the UE completes switching of the active UL TCI state within a delay defined below.

### {{Known Condition for UL TCI State}}

When an RS resource for layer 1 (L1)-RSRP measurement is an RS in a target UL TCI state (a UL TCI state applied after switching, a UL TCI state indicated by a switching indication) or is QCLed with the target UL TCI state, and the following plurality of conditions are satisfied during a period from the last transmission of the RS resource used for an L1-RSRP measurement report for the target UL TCI state until completion of active UL TCI state switching, the UL TCI state is known:
- A UL TCI state switch command is received within 1280 ms from the last transmission of the RS resource for a beam report or measurement.
- Before the TCI state switch command, the UE has transmitted at least one L1-RSRP report for the target UL TCI state.
- During a period of the UL TCI state switching, the RS configured in the target UL TCI state remains detectable.
- The SNR of the RS configured in the target UL TCI state is equal to or larger than 3 dB.
- During a period of the UL TCI state switching, the target UL TCI state remains detectable.
- During a period of the UL TCI state switching, the SSB associated with the UL TCI state remains detectable.

-- The SNR of the UL TCI state is equal to or larger than 3 dB.
-- The SSB can be associated with the serving cell PCI or a PCI different from the serving cell PCI.

When the conditions are not satisfied, the UL TCI state is unknown.

### {{MAC CE Based UL TCI State Switching Delay}}

The following requirement is applied to UL TCI state switching using the separate UL TCI state or the joint TCI state of a unified TCI state switching framework.

When a source RS in the UL TCI state or the joint TCI state is associated with the PCI different from the PCI of the serving cell, and the cell with the different PCI satisfies the known cell conditions, the requirement is applied. If the known cell conditions are not satisfied, a longer delay is expected.

When a target PL-RS (a PL-RS applied after switching, a PL-RS corresponding to a target TCI state) is not maintained in a case of joint TCI state switching, the UE does not expect to transmit the UL based on the target TCI state before the UE completes DL and UL TCI state switching.

When beamCorrespondenceWithoutUL-BeamSweeping is set to 1 in separate UL TCI state switching or joint TCI state switching for the PUCCH, the PUSCH, or the semi-persistent (SP)/aperiodic (A)/periodic (P)-SRS, the UE follows the following in response to reception of the PDSCH for transmitting the MAC CE activation command in the slot n on the serving cell.
- (When the target TCI state is known,) the UE can transmit a UL signal by using the target TCI state in slot n + T_{HARQ} + 3Nₛₗₒₜ^{subframe,µ} + NM * (T_{first-target-PL-RS} + T_{target-PL-RS} + 2 ms)/NR_slot_length.
- When the target TCI state is unknown, the UE can transmit a UL signal by using the target TCI state in slot n + T_{HARQ} + 3Nₛₗₒₜ^{subframe,µ} + (T_{L1-RSRP} + T_{first-target-PL-RS} + 4 * T_{target-PL-RS} + 2 ms)/NR_slot_length.
- T_{HARQ} (in units of slots) is time between DL data transmission and a confirmation response (acknowledgement).
- NM is 1 when the target PL-RS is not maintained by the UE, otherwise 0.
- The PL-RS is maintained in the following case.
   -- The target PL-RS is associated with or is included in the UL or joint TCI states in the active TCI list for transmission of the PUSCH/PUCCH/SRS.
   -- The following four different RSs configured as the PL-RS for each serving cell are present in all the active UL (or joint) TCI states for transmission of the PUSCH/PUCCH/SRS.
      --- The known conditions of the PL-RS are satisfied. When more than four different RSs are configured as the PL-RS for each serving cell in all the active UL (or joint) TCI states, the requirement is not applied.
- T_{first-target-PL-RS} is time until first PL-RS transmission after L1-RSRP measurement when the target TCI state is unknown.
- T_{first-target-PL-RS} is time until first PL-RS transmission after the MAC CE command for the known TCI state is decoded by the UE.
- T_{target-PL-RS} is a period of the target PL-RS as the SSB or the NZP CSI-RS when the PL-RS is associated with the serving cell.
- T_{target-PL-RS} is a period of the target PL-RS as the SSB when the PL-RS is associated with the PCI different from the serving cell.
- T_{L1-RSRP} is time for Rx beam refinement in FR2.
- For an SSB, T_{L1-RSRP} is defined as T_{L1}-_{RSRP_Measurement_Period_SSB}, using assumption of M = 1 and T_{Report} = 0.
- For a CSI-RS, CSI-RS based L1-RSRP measurement is applied to the TCI state only when the source RS is associated with the serving cell, higher layer parameter repetition set to ON is configured, and assumption of M = 1 is used for a P-CSI-RS, and for an A-CSI-RS when the number of resources in a resource set is at least equal to MaxNumberRxBeam, T_{L1-RSRP} is defined as T_{L1-RSRP_Measurement_Period_CSI-RS}, using T_{Report} = 0.
- The UE can perform transmission using an old UL TCI state up to slot n + T_{HARQ} + 3Nₛₗₒₜ^{subframe,µ}.

### {{DCI Based UL TCI State Switching Delay}}

When the UE is configured with a higher layer parameter with DLorJointTCIState or UL-TCIState, activated with the TCI state for UL transmission by a MAC CE indication of more than one codepoint, and receives DCI format 1_1/1_2 with or without DL assignment providing indicated TCI-State or an indicated TCI state pair in an active TCI list for a certain CC, the UE transmits the PUCCH with HARQ-ACK information corresponding to DCI for transmitting the TCI-State indication.

When the target TCI state is known, the target TCI state is in the active TCI state list, and the target PL-RS is maintained, and only when the DCI format indicating switching of the UL TCI state or the joint TCI state is received, the following requirement is applicable.

If the target TCI state is known, UL TCI switching to the indicated UL TCI state or the indicated joint TCI state in the DCI format is completed to start from a first slot that is at least BeamAppTime-r17 symbols after the last symbol of the PUCCH for transmitting a HARQ-ACK according to the DCI triggering TCI state activation. Both of the first slot and the BeamAppTime-r17 symbols are determined on the carrier with the smallest SCS in the carrier for applying the beam indication. The value of BeamAppTime-r17 is defined in a radio resource control (RRC) protocol specification. The "known conditions for the UL TCI state" described above are applied.

If the PL-RS is associated with or is included in the UL TCI state or the joint TCI state, the UL TCI switching and PL-RS switching are simultaneously completed.

### {PL-RS Switching Delay ... Requirement for Supporting of RRM} {{Known Condition for PL-RS}}

When an RS resource for layer 1 (L1)-RSRP measurement is a target PL-RS (a PL-RS applied after switching, a PL-RS indicated by a switching indication) or is QCLed with the target PL-RS, and the following plurality of conditions are satisfied during a period from the last transmission of the RS resource used for an L1-RSRP measurement report for the target PL-RS until completion of active DL TCI state switching, the PL-RS is known:
- A PL-RS switch command is received within 1280 ms from the last transmission of the RS resource for a beam report or measurement.
- Before the PL-RS switch command, the UE has transmitted at least one L1-RSRP report for the target PL-RS.
- During a period of the PL-RS switching, the target PL-RS remains detectable.
   -- The SNR of the target PL-RS is equal to or larger than 3 dB.
- During a period of the PL-RS switching, the SSB associated with the PL-RS remains detectable.
   -- The SNR of the associated SSB is equal to or larger than 3 dB.

When the conditions are not satisfied, the PL-RS is unknown.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

- The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

In the present disclosure, an indicated TCI state, a unified TCI state, a TCI state applied to a channel/signal configured to follow a unified TCI state, a TCI state applied to a CORESET/PDCCH associated with a UE-dedicated PDSCH and a USS, and a TCI state applied to a PUCCH and a PUSCH may be interchangeably interpreted.

### (CSI-RS)

In Rel. 15, a CSI-RS is used as a DL RS for at least one of channel state information (CSI) acquisition, beam management (BM), beam failure recovery (BFR), and fine tracking of time and frequency, for example. The CSI-RS supports 1, 2, 4, 8, 12, 16, 24, and 32 ports (antenna ports, CSI-RS ports). The CSI-RS supports periodic, semi-persistent, and aperiodic transmission. In order to adjust overhead and CSI estimation accuracy, frequency density of the CSI-RS can be configured.

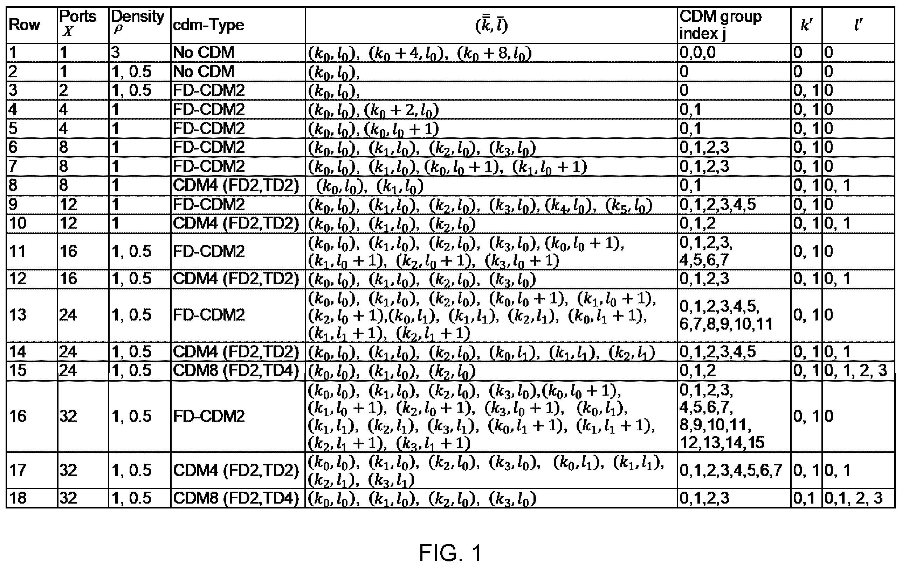

FIG. 1 is a diagram to show an example of CSI-RS locations in a slot. Rows of the table indicate a row number, the number of ports, density of the frequency domain, a CDM type, time and frequency (time/frequency) locations (locations of component resources (k bar, l bar)), a code division multiplexing (CDM) group index, and resource locations in component resources ((REs, symbols), (k', l')). Here, the time/frequency locations are locations of time and frequency resources (component resources) of the CSI-RS corresponding to one port. k bar is a notation with an overline attached over "k". k bar indicates a start resource element (RE) index of a component resource, and l bar indicates a start symbol (OFDM symbol) index of the component resource.

Examples of a CDM group include no CDM (without CDM, N/A), FD-CDM2, CDM4, and CDM8. In FD-CDM2, the CSI-RS having two ports is multiplexed on the same time and frequency by multiplying a frequency domain (FD)-orthogonal cover code (OCC) having a length of 2 in units of REs (FD2). In CDM4, the CSI-RS having four ports is multiplexed on the same time and frequency by multiplying an FD-OCC having a length of 2 and a time domain (TD)-OCC having a length of 2 in units of REs and units of symbols (FD2TD2). In CDM8, the CSI-RS having eight ports is multiplexed on the same time and frequency by multiplying an FD-OCC having a length of 2 and a TD-OCC having a length of 4 in units of REs and units of symbols (FD2TD4).

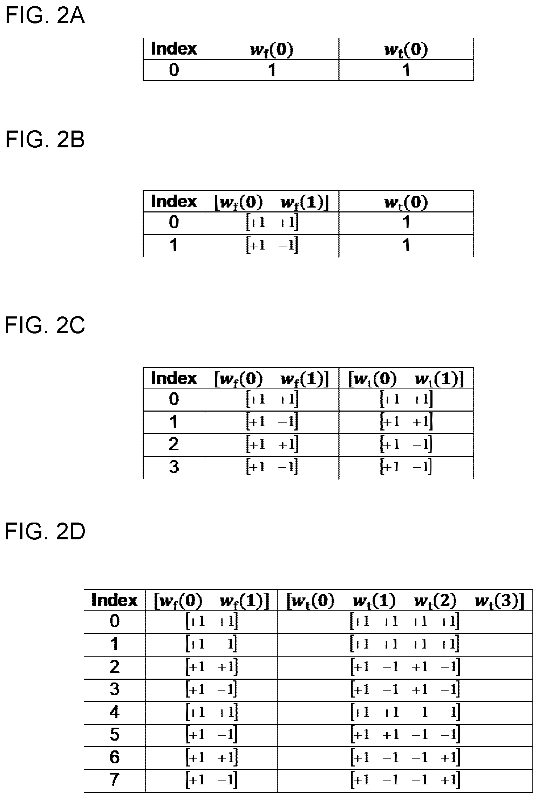

FIG. 2A to FIG. 2D are diagrams to show examples of the FD-OCC and the TD-OCC. A sequence of the FD-OCC is represented by w_{f}(k'), and a sequence of the TD-OCC is represented by wt(k'). FIG. 2A shows a case in which the CDM type is no CDM. FIG. 2B shows a case in which the CDM type is FD-CDM2. FIG. 2C shows a case in which the CDM type is CDM4. FIG. 2D shows a case in which the CDM type is CDM8.

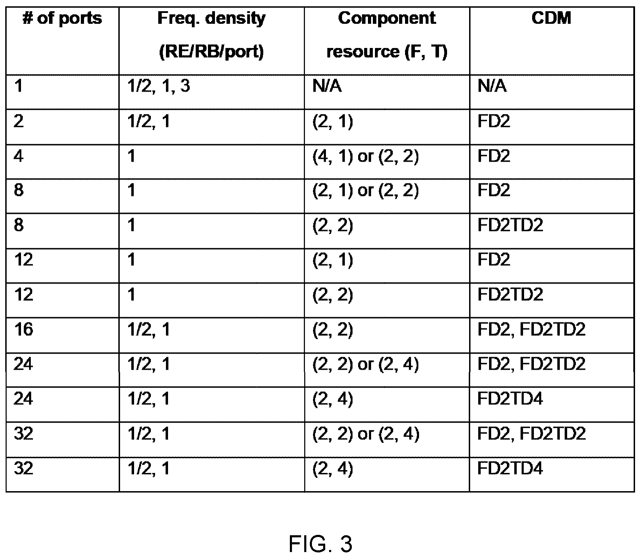

FIG. 3 is a diagram to show an example of CSI-RS locations for each number of ports, based on FIG. 1. The figure shows frequency density, a component resource size (a size in the frequency direction [REs], a size in the time direction [symbols]), and a CDM type for each number of ports.

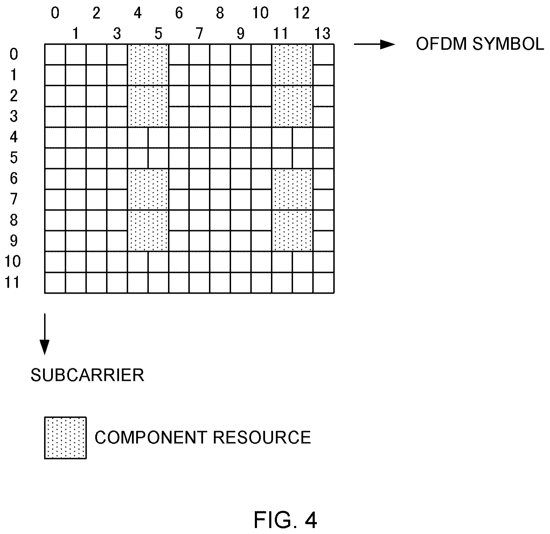

For example, FIG. 4 shows an example of resource element (RE) mapping of the CSI-RS with the number of ports being configured to 32 and the component resource size being configured to two subcarriers × two symbols (row index 17 of FIG. 1). When four of the component resources of two subcarriers × two symbols are multiplexed (frequency division multiplexed (FDMed)) in the frequency domain and two of the component resources are multiplexed (time division multiplexed (TDMed)) in the time domain in the frequency domain and the time domain of one physical resource block (PRB) × one slot, 4 × 2 component resources are mapped. Furthermore, when the CSI-RS in each component resource is multiplied by the FD-OCC having a length of two subcarriers and the TD-OCC having a length of two symbols, four CSI-RSs are multiplexed (code division multiplexed (CDMed)) (CDM4, FD2TD2). Thus, the CSI-RS having 32 ports are transmitted in a resource of one PRB × one slot.

When the maximum number of ports of the CSI-RS, which is 32, is larger than the maximum number of layers, which is 8, the UE can measure more channel states, and measurement accuracy can be enhanced.

However, in future radio communication systems (for example, Rel. 19 or later versions), it is considered that the number of CSI-RS ports becomes insufficient.

In multiplexing of CSI-RSs for a plurality of UEs, even when different beams (for example, analog beams, precoding) are applied to a plurality of UEs, orthogonality may collapse, and therefore it is preferable that different CSI-RS ports be applied to (configured for) the plurality of UEs. In order to cause different CSI-RSs to be applied to a plurality of UEs, it is preferable that the number of CSI-RS ports be increased.

It is considered that the number of configured CSI-RS ports is different for each terminal, and CSI-RSs for a plurality of UEs with different numbers of CSI-RS ports are multiplexed. For example, when a legacy UE of a previous release (for example, Rel. 15) and a new UE of a new release (for example, Rel. 19 or later versions) are multiplexed in one serving cell, it is considered that the number of CSI-RS ports becomes insufficient.

By using a large number of CSI-RS ports, channel measurement accuracy is enhanced.

In view of this, the inventors of the present invention came up with the idea of a method for increasing CSI-RSs.

Embodiments according to the present disclosure will be described in detail with reference to the drawings as follows. Note that the embodiments (for example, the cases) described below may each be used individually, or at least two of them may be combined to be applied.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a_{b}, a_b, and a notation in which b is attached to a at the lower right may be interchangeably interpreted. In the present disclosure, a^{c}, a^c, and a notation in which c is attached to a at the upper right may be interchangeably interpreted. In the present disclosure, a_{b}^{c}, a_b^c, and a notation in which b is attached to a at the lower right and c is attached thereto at the upper right may be interchangeably interpreted. In the present disclosure, ceil(x) and a ceiling function may be interchangeably interpreted. In the present disclosure, floor(x) and a floor function may be interchangeably interpreted.

In the present disclosure, the following abbreviations may be used.
- time division multiplexing: TDM
- time-division-multiplexed: TDMed
- frequency division multiplexing: FDM
- frequency-division multiplexed: FDMed

In the present disclosure, a port, a CSI-RS port, and an antenna port may be interchangeably interpreted. In the present disclosure, a CSI-RS resource, a CSI-RS configuration, and a time and frequency resource for a CSI-RS may be interchangeably interpreted.

In the present disclosure, a beam, precoding, a quasi co-location (QCL) assumption, a QCL relationship, a transmission configuration indicator (TCI) state, a spatial domain filter, spatial domain reception filter, and a reference signal (RS) may be interchangeably interpreted.

In the present disclosure, a legacy CSI-RS resource and a Rel-15 CSI-RS resource may be interchangeably interpreted. An additional CSI-RS resource, a CSI-RS resource absent in Rel. 15, and a CSI-RS resource added in a new release may be interchangeably interpreted.

In the present disclosure, application of an OCC to a CSI-RS and multiplication of a CSI-RS by an OCC may be interchangeably interpreted. In the present disclosure, application of an OCC to a receive signal, multiplication of a receive signal by an inter-PRB OCC, and division of a receive signal by an inter-PRB OCC may be interchangeably interpreted.

### (Radio Communication Method)

### <Embodiment A1>

### <<Inter-PRB OCC>>

An OCC (a frequency domain OCC, an inter-PRB OCC) over a plurality of PRBs may be applied to the CSI-RS. Each value (element) in the inter-PRB OCC may be applied for each PRB. Each value in the inter-PRB OCC may be applied for each of more than one PRB. Each value in the inter-PRB OCC may be applied for each precoding resource block group (PRG).

The PRG may be consecutive PRBs to which the same DL precoding is applied. The UE may assume that the same precoding is applied to consecutive DL allocations of a plurality of PRBs in the PRG.

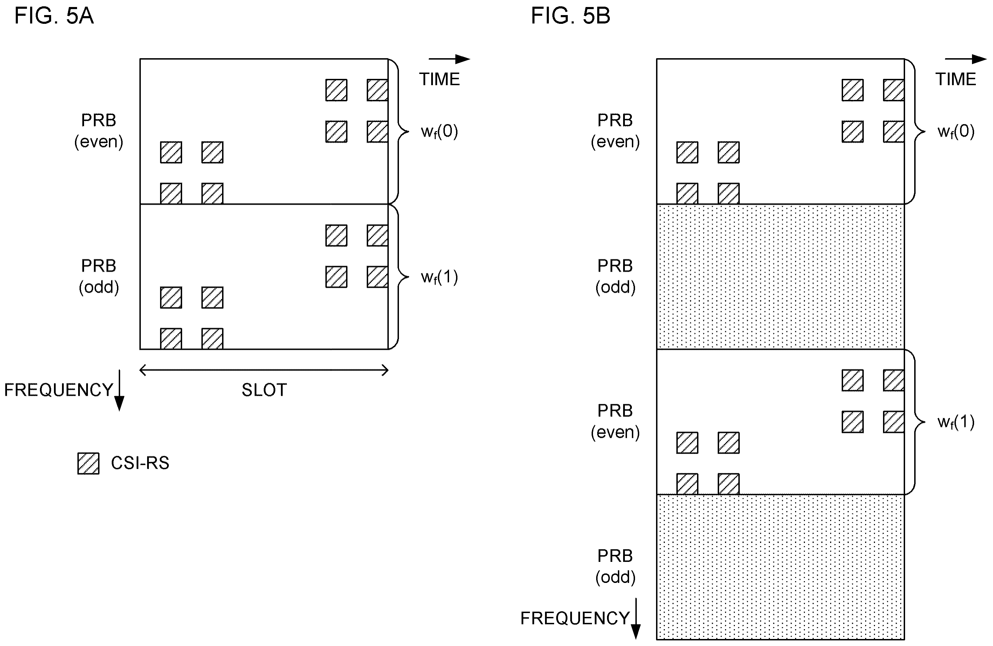

The inter-PRB OCC may be applied to consecutive PRBs. For example, as shown in FIG. 5A, the inter-PRB OCC having a length of 2 may be applied to PRB #0 and PRB #1.

The inter-PRB OCC may be applied to non-consecutive PRBs. The non-consecutive PRBs may be PRBs having even-numbered PRB indices out of a plurality of PRBs configured for CSI-RS resources, may be PRBs having odd-numbered PRB indices out of a plurality of PRBs configured for CSI-RS resources, may be PRBs having intervals of a certain number of PRBs out of a plurality of PRBs configured for CSI-RS resources, may have a Comb configuration for a plurality of PRBs configured for CSI-RS resources, or may be defined in order from the lowest PRB (PRB having the smallest index) or the highest PRB (PRB having the largest index) out of a plurality of PRBs configured for CSI-RS resources.

For example, as shown in FIG. 5B, the inter-PRB OCC [w_{f}(0) w_{f}(1)] having a length of 2 may be applied to PRB #0 and PRB #2 having even-numbered PRB indices. [w_{f}(0) w_{f}(1)] may be [+1 +1] or [+1 -1].

When the CSI-RS is mapped only to the PRB of an odd-numbered PRB index or the PRB of an even-numbered PRB index, the inter-PRB OCC need not be applied. When the CSI-RS is mapped only to the PRB of an odd-numbered PRB index or the PRB of an even-numbered PRB index, the inter-PRB OCC may be applied.

An association (for example, a table) between OCC index i and a value of the inter-PRB OCC may be defined for an inter-PRB OCC length. Each value of the inter-PRB OCC may be defined using a cyclic shift α (for example, exp(jα · m), exp(j2πφ(m)/N), or the like).

When the inter-PRB OCC length is 2, the inter-PRB OCC may be a time domain OCC (double symbol OCC) of Rel. 15. The inter-PRB OCC may be defined using cyclic shift α = {0, π}.

When the inter-PRB OCC length is 4, the inter-PRB OCC may be defined by a table, or may be defined using a cyclic shift. The inter-PRB OCC may be defined using cyclic shift α = {0, π/2, π, 3π/2}.

When the inter-PRB OCC length is 3, the inter-PRB OCC may be defined using cyclic shift α = {0, n/3, 2π/3}, or may be defined by a table including a value obtained from the cyclic shift. The cyclic shift α may be {0, -π/3, -2n/3}.

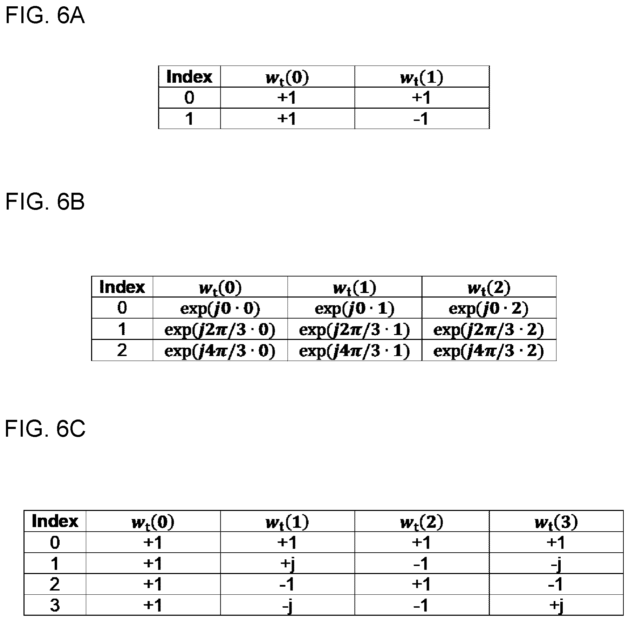

For example, based on the table of FIG. 6A, the CSI-RS to which the inter-PRB OCC [+1 +1] having OCC index = 0 is applied is the same as the CSI-RS to which the inter-PRB OCC is not applied, and is thus received and measured through the same operation as Rel. 15, and is received by a Rel-15 UE and a new-release UE. The CSI-RS to which the inter-PRB OCC [+1 -1] having OCC index = 1 is applied is received and measured only by the new-release UE.

For example, based on the table of FIG. 6B, the CSI-RS to which the inter-PRB OCC [exp(j0 · 0) exp(j0 · 1) exp(j0 · 2)] (the same as [+1 +1 +1]) having OCC index = 0 is applied is the same as the CSI-RS to which the inter-PRB OCC is not applied, and is thus received and measured through the same operation as Rel. 15, and is received by a Rel-15 UE and a new-release UE. The CSI-RS to which the inter-PRB OCC having OCC index = 1 and 2 is applied is received and measured only by the new-release UE.

For example, based on the table of FIG. 6C, the CSI-RS to which the inter-PRB OCC [+1 +1 +1 +1] having OCC index = 0 is applied is the same as the CSI-RS to which the inter-PRB OCC is not applied, and is thus received and measured through the same operation as Rel. 15, and is received by a Rel-15 UE and a new-release UE. The CSI-RS to which the inter-PRB OCC having OCC index = 1, 2, and 3 is applied is received and measured only by the new-release UE.

### <<UE Operation>>

The UE (for example, the new-release UE) supporting the inter-PRB OCC may measure the CSI-RS obtained by multiplying each PRB by the value in the inter-PRB OCC and adding (in-phase combining) a plurality of obtained multiplication results.

The UE (for example, the previous-release UE) not supporting the inter-PRB OCC or not configured with the inter-PRB OCC may measure the CSI-RS obtained by adding a receive signal of each PRB of a plurality of PRBs.

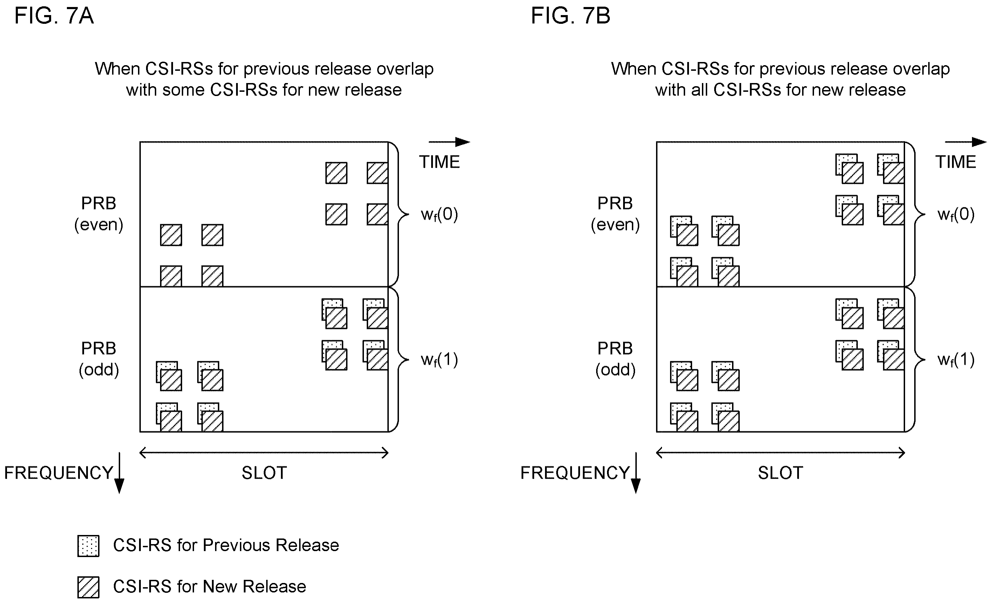

The UE need not assume that only some overlap between time and frequency resources of the CSI-RS to which the inter-PRB OCC is applied and time and frequency resources of the CSI-RS of another UE. For example, as shown in FIG. 7A, the UE need not assume a case in which a new-release CSI-RS is mapped to PRBs #0 and 1 and the inter-PRB OCC is applied and a previous-release CSI-RS is mapped to PRB #1. In such a case, the new-release CSI-RS and the previous-release CSI-RS are not orthogonal to each other (cannot be separated by the UE).

All the time and frequency resources of the CSI-RS to which the inter-PRB OCC is applied and all the time and frequency resources of the CSI-RS of another UE may overlap. For example, as shown in FIG. 7B, the new-release CSI-RS may be mapped to PRBs #0 and 1 and the inter-PRB OCC may be applied, and the previous-release CSI-RS may be mapped to PRBs #0 and 1. In such a case, the new-release CSI-RS and the previous-release CSI-RS are orthogonal to each other (can be separated by the UE).

A transmission bandwidth (number of PRBs) of the CSI-RS may be a multiple of the inter-PRB OCC length. The UE may assume that the transmission bandwidth (number of PRBs) of the CSI-RS is a multiple of the inter-PRB OCC length. The UE may measure the CSI-RS by applying the inter-PRB OCC over a bandwidth of a multiple of the inter-PRB OCC length.

By adding a receive signal of each PRB over a multiple of the inter-PRB OCC length, the previous-release UE can measure only the CSI-RS to which the inter-PRB OCC is not applied (corresponding to the inter-PRB OCC having a value of all + 1), and can remove the CSI-RS corresponding to another inter-PRB OCC.

When the transmission bandwidth of the CSI-RS is not a multiple of the inter-PRB OCC length, the UE may measure only a bandwidth of a multiple of the inter-PRB OCC length of the CSI-RS, and need not measure the rest of the band. For example, when the inter-PRB OCC length is 2, the UE may apply the inter-PRB OCC to a receive signal of CSI-RS resources for measurement for every two PRBs (may apply a value corresponding to the inter-PRB OCC to a receive signal of each of two PRBs). The UE need not measure the rest of the band smaller than two PRBs.

Even in the case of FIG. 7B described above, the previous-release UE may not be able to appropriately measure the CSI-RS unless the previous-release UE knows the inter-PRB OCC length, and the new-release CSI-RS may become interference.

When there is no channel variation for a plurality of CSI-RSs transmitted using the same precoding, measurement accuracy of the CSI-RS enhances by performing in-phase combining on those CSI-RSs.

The previous-release UE may perform in-phase combining on receive signals (complex numbers) of the CSI-RS for each PRB in the PRG. Owing to the operation, even if the previous-release UE does not know that the inter-PRB OCC is applied, the previous-release UE can measure the CSI-RS through the same reception operation as the case in which the inter-PRB OCC of all + 1 is applied. Therefore, the previous-release CSI-RS and the new-release CSI-RS are orthogonalized.

The inter-PRB OCC length may be the number of PRBs in the PRG. The CSI-RS may be mapped to all the PRBs in the PRG, and the inter-PRB OCC may be applied.

The inter-PRB OCC length may be the number of PRBs to which the CSI-RS of the PRG is mapped. For example, it is assumed that one PRG corresponds to four PRBs, the CSI-RS is mapped to two PRBs in the PRG, and the inter-PRB OCC length is 2. In this case, by performing in-phase combining on receive signals of the CSI-RSs in the PRG and measuring the CSI-RSs, even if the previous-release UE does not know that the inter-PRB OCC is applied, the previous-release UE performs reception operation corresponding to the case of applying the inter-PRB OCC [+1 +1]. Consequently, the previous-release UE can measure the previous-release CSI-RS with reduced interference of the new-release CSI-RS. In this case, because the new-release UE knows that the inter-PRB OCC is applied, the new-release UE applies the inter-PRB OCC [+1 -1], and performs in-phase combining on receive signals of the CSI-RSs in the PRG and measures the CSI-RSs. Consequently, the new-release UE can measure the new-release CSI-RS with reduced interference of the previous-release CSI-RS.

When the number of PRBs in the PRG is not a multiple of the inter-PRB OCC length, the UE may measure only a bandwidth of a multiple of the inter-PRB OCC length of the PRG, and need not measure the rest of the band.

### {Measurement of Entire Resource Range}

In the same time and frequency resources as the CSI-RS to which the inter-PRB OCC is applied or the CSI-RS to which the inter-PRB OCC is not applied, the CSI-RS to which the inter-PRB OCC is applied may be transmitted to another UE. The UE may receive the CSI-RS in a resource range (for example, a band) to which the inter-PRB OCC may be applied, and thereby measure the CSI-RS corresponding to a specific inter-PRB OCC.

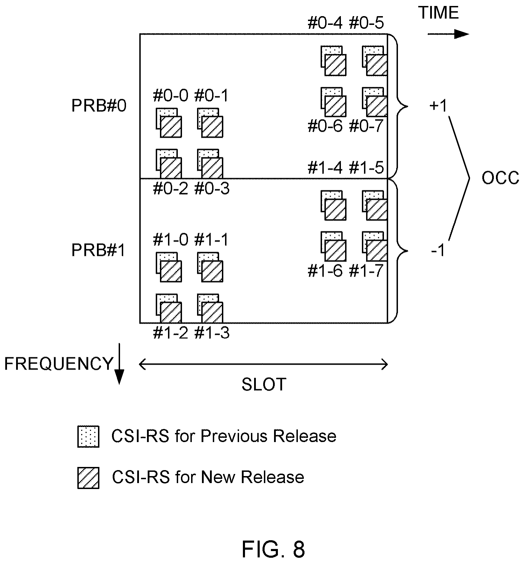

In the example of FIG. 8, CSI-RS #0-0 in PRB #0 and CSI-RS #1-0 in PRB #1 are mapped to the same location in the same slot in each PRB, and have the same CSI-RS sequence (transmit signal sequence).

The UE configured with CSI-RS resources to which the inter-PRB OCC (for example, [+1 +1]) having a value of all + 1 is applied or the UE configured with CSI-RS resources to which the inter-PRB OCC is not applied may measure the CSI-RS in each PRB without using the inter-PRB OCC, unless the CSI-RS of another UE multiplexed on time and frequency resources of the CSI-RS is transmitted.

If the inter-PRB OCC may be applied, the UE cannot accurately measure the CSI-RS in each PRB unless the UE knows the inter-PRB OCC.

In the resource range to which the inter-PRB OCC may be applied, the UE may apply a specific inter-PRB OCC having a value of all + 1 to entire receive signals in the resource range, and thereby measure the CSI-RS corresponding to the specific inter-PRB OCC.

The resource range to which the inter-PRB OCC may be applied may be defined in a specification, or may be configured for the UE by higher layer signaling. The resource range may be indicated in units of two PRBs (a pair of an even-numbered PRB index and an odd-numbered PRB index), in units of three PRBs, or in units of four PRBs. The UE may determine the resource range to which the inter-PRB OCC is applied, based on the band (PRBs) of the configured CSI-RS resources.

The UE may be notified of whether or not the inter-PRB OCC is applied by at least one of higher layer signaling, a MAC CE, and DCI. The UE may switch the reception operation according to the notification. For example, the UE notified that the inter-PRB OCC is not applied (or that the CSI-RS for another UE is not multiplexed on the time and frequency resources of the CSI-RS) may measure the CSI-RS in each of at least one PRB in the resource range, or may perform in-phase combining on a plurality of PRBs in the CSI-RS resources. For example, the UE notified that the inter-PRB OCC is applied (or that the CSI-RS for another UE is multiplexed on the time and frequency resources of the CSI-RS) may identify the inter-PRB OCC based on receive signals of all the PRBs, and measure the CSI-RS to which the identified inter-PRB OCC is applied.

According to the present embodiment, by applying the inter-PRB OCC to the CSI-RS over a plurality of PRBs, the number of CSI-RSs (ports) to be orthogonalized (multiplexed) can be increased.

### <Embodiment A2>

### <<Inter-Time Field OCC>>

An OCC (a time domain OCC, an inter-time field OCC) over a plurality of time fields in the time domain may be applied to the CSI-RS. Each value (element) in the inter-time field OCC may be applied for each time field (period). The time field may be any one of a subframe, a slot, a sub-slot, a mini-slot, and a symbol. The time field may be longer than a symbol.

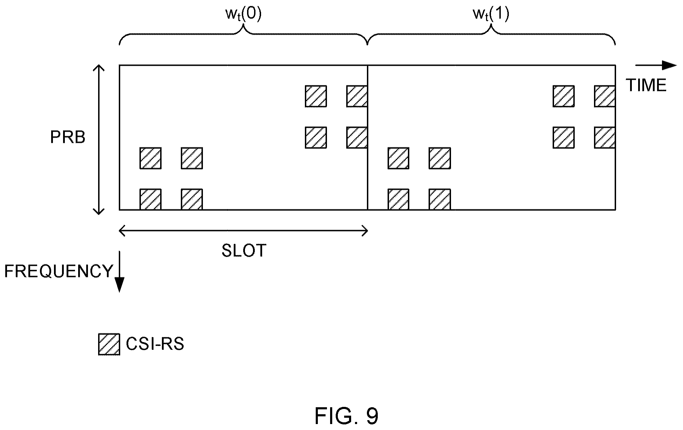

The inter-time field OCC may be applied to consecutive time fields. For example, as shown in FIG. 9, the time field may be a slot, and an inter-slot OCC [wₜ(0) wₜ(1)] having a length of 2 may be applied to slot #0 and slot #1. [wₜ(0) wₜ(1)] may be [+1 +1] or [+1 -1].

Regarding the inter-time field OCC, similarly to the inter-PRB OCC of Embodiment A1, an association (for example, a table) between OCC index i and a value of the inter-time field OCC may be defined for each inter-time field OCC length. Each value of the inter-time field OCC may be defined using a cyclic shift α (for example, exp(jα · m), exp(j2πφ(m)/N), or the like). When the OCC length is 2, each value of the inter-time field OCC may be defined using cyclic shift α = {0, π}. When the OCC length is 3, the OCC may be defined using cyclic shift α = {0, π/3, 2π/3}, or may be defined by a table including a value obtained from the cyclic shift. The cyclic shift α may be {0, -π/3, -2π/3}. When the OCC length is 4, the OCC may be defined by a table, or may be defined using cyclic shift α = {0, π/2, π, 3π/2}. Similarly to the case in which the OCC length is 3, the order of the values of the cyclic shift α may be interchanged.

The inter-time field OCC may be applied to non-consecutive time fields. The non-consecutive time fields may be a plurality of time fields having even-numbered indices out of a period configured for CSI-RS resources, may be a plurality of time fields having odd-numbered indices out of a period configured for CSI-RS resources, may be a plurality of time fields having intervals of a certain number of time fields out of a period configured for CSI-RS resources, or may be defined in order from the first time field (having the smallest index) or the last time field (having the largest index) out of a period configured for CSI-RS resources.

When the CSI-RS is mapped only to the time field of an odd-numbered index or the time field of an even-numbered index, the inter-time field OCC need not be applied. When the CSI-RS is mapped only to the time field of an odd-numbered index or the time field of an even-numbered index, the inter-time field OCC may be applied. In this case, orthogonality other than the inter-time field OCC can be maintained, and reduction of measurement quality can be prevented.

The inter-time field OCC length may be the number of time fields (for example, slots) in an application period (for example, a radio frame) including a given number of time fields.

A case is considered in which, when sequence hopping of the CSI-RS is performed in the application period, orthogonality among a plurality of inter-time field OCCs multiplexed in the application period collapses. In view of this, sequence hopping may be stopped in the resource range to which the inter-time field OCC may be applied.

The CSI-RS sequence may be a pseudo-random sequence (a pseudo-noise (PN) sequence, for example, a Gold sequence, a Gold sequence having a length of 31, an M-sequence). In Rel. 15, an initial value cᵢₙᵢₜ used for determination of the CSI-RS sequence is based on a slot index and a symbol index.

When the inter-time field OCC (inter-slot OCC) is applied among slots over the application period, sequence hopping in the application period may be stopped (cᵢₙᵢₜ of the first or last symbol may be applied to all the symbols in the application period).

cᵢₙᵢₜ is configured to be specific to the UE, and thus the network (for example, the base station) may configure a scramble ID (for example, scramblingID) for cᵢₙᵢₜ for the UE by higher layer signaling so that sequence hopping is not performed in the application period.

### <<UE Operation>>

The UE (for example, the new-release UE) supporting the inter-time field OCC may measure the CSI-RS obtained by multiplying each time field by the value in the inter-time field OCC and adding (in-phase combining) obtained multiplication results.

The UE (for example, the previous-release UE) not supporting the inter-time field OCC or not configured with the inter-time field OCC may measure the CSI-RS obtained by adding a receive signal of each time field of a plurality of time fields.

The UE need not assume that time and frequency resources of the CSI-RS to which the inter-time field OCC is applied overlap with some of the time and frequency resources of the CSI-RS of another UE.

All the time and frequency resources of the CSI-RS to which the inter-time field OCC is applied and all the time and frequency resources of the CSI-RS of another UE may overlap.

Duration (number of time fields) of the CSI-RS may be a multiple of the inter-time field OCC length.

By adding a receive signal of each time field over a multiple of the inter-time field OCC length, the previous-release UE can measure only the CSI-RS to which the inter-time field OCC is not applied (corresponding to the inter-time field OCC having a value of all + 1), and can remove the CSI-RS corresponding to another inter-time field OCC.

When a transmission bandwidth of the CSI-RS is not a multiple of the inter-time field OCC length, the UE may measure only a period of a multiple of the inter-time field OCC length of the CSI-RS, and need not measure the rest of the period.

### {Measurement of Entire Resource Range}

In the same time and frequency resources as the CSI-RS to which the inter-time field OCC is applied or the CSI-RS to which the inter-time field OCC is not applied, the CSI-RS to which the inter-time field OCC is applied may be transmitted to another UE. The UE may receive the CSI-RS in a resource range (for example, a period) to which the inter-time field OCC may be applied, and thereby measure the CSI-RS corresponding to a specific inter-time field OCC.

The UE configured with CSI-RS resources to which the inter-time field OCC (for example, [+1 +1]) having a value of all + 1 is applied or the UE configured with CSI-RS resources to which the inter-time field OCC is not applied may measure the CSI-RS in each time field without using the inter-time field OCC, unless the CSI-RS of another UE multiplexed on time and frequency resources of the CSI-RS is transmitted.

If the inter-time field OCC may be applied, the UE cannot accurately measure the CSI-RS in each time field unless the UE knows the inter-time field OCC.

In the resource range to which the inter-time field OCC may be applied, the UE may apply a specific inter-time field OCC having a value of all + 1 to entire receive signals in the resource range, and thereby measure the CSI-RS corresponding to the specific inter-time field OCC.

The resource range to which the inter-time field OCC may be applied may be defined in a specification, or may be configured for the UE by higher layer signaling. The resource range may be indicated in units of two time fields (a pair of an even-numbered time field index and an odd-numbered time field index), in units of three time fields, or in units of four time fields. The UE may determine the resource range to which the inter-time field OCC is applied, based on the duration (number of symbols) of the configured CSI-RS resources.

The UE may be notified of whether or not the inter-time field OCC is applied by at least one of higher layer signaling, a MAC CE, and DCI. The UE may switch the reception operation according to the notification. For example, the UE notified that the inter-time field OCC is not applied (or that the CSI-RS for another UE is not multiplexed on the time and frequency resources of the CSI-RS) may measure the CSI-RS in each of at least one time field in the resource range, or may perform in-phase combining on a plurality of time fields in the CSI-RS resources. For example, the UE notified that the inter-time field OCC is applied (or that the CSI-RS for another UE is multiplexed on the time and frequency resources of the CSI-RS) may identify the inter-time field OCC based on receive signals of all the time fields, and measure the CSI-RS to which the identified inter-time field OCC is applied.

According to the present embodiment, by applying the inter-time field OCC to the CSI-RS over a plurality of time fields, the number of CSI-RSs (ports) to be orthogonalized (multiplexed) can be increased.

### <Embodiment A3>

Rel. 15 supports up to 32 CSI-RS ports by using 32 resources (REs, subcarriers × symbols) in one PRB. The number of CSI-RS ports may be increased by increasing the time and frequency resources per PRB.

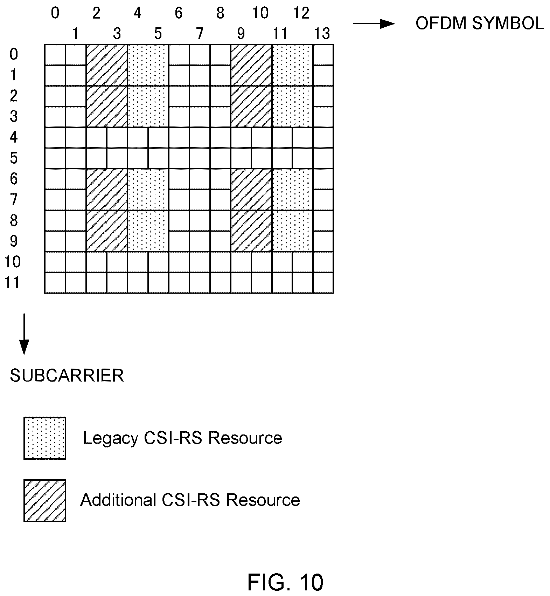

The UE may receive the CSI-RS by using at least one resource (time and frequency resource) not used for a Rel-15 CSI-RS (legacy CSI-RS resources). As shown in FIG. 10, for the legacy CSI-RS resources, new CSI-RS resources (additional CSI-RS resources) may be defined in symbols #2, #3, #9, and #10. Consequently, CSI-RS resources of 64 REs can be used in one PRB, and can be associated with 64 ports.

For the additional CSI-RS resources, at least one of the time domain OCC and the frequency domain OCC may be applied.

In order to maintain compatibility with Rel. 15, after at least one of the time domain OCC and the frequency domain OCC of Rel. 15 is applied to the CSI-RS, at least one (additional OCC) of an additional time domain OCC and frequency domain OCC may be applied.

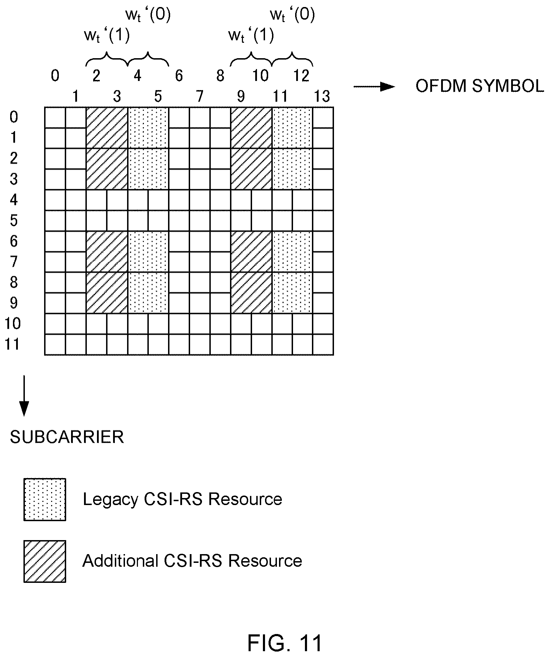

For example, as shown in FIG. 11, after at least one of the time domain OCC and the frequency domain OCC of Rel. 15 is applied to the legacy CSI-RS resources and the additional CSI-RS resources in FIG. 10, an additional time domain OCC wₜ'(m) is applied. [wₜ'(0) wₜ'(1)] may be [+1 +1] or [+1 -1]. Each value of the additional time domain OCC may be applied every two symbols.

In this example, wₜ'(0) is applied to symbols #4 and #5, wₜ'(1) is applied to symbols #2 and #3, wₜ'(0) is applied to symbols #11 and #12, and wₜ'(1) is applied to symbols #9 and #10.

The first value (for example, wₜ'(0)) of the additional OCC is always +1, and the value of the CSI-RS does not change even when the additional OCC is applied, and thus the first value (for example, wₜ'(0)) of the additional OCC may be applied to the legacy CSI-RS resources, and a value (for example, wₜ'(1)) subsequent to the first value of the additional OCC may be applied to the additional CSI-RS resources. Consequently, the previous-release UE can measure the CSI-RS, and can increase the number of ports of the new-release CSI-RS.

[wₜ'(0) wₜ'(1)] may be applied in order from a large symbol index to a small symbol index, or may be applied in order from a small symbol index to a large symbol index. For example, wₜ'(0) may be applied to symbols #2 and #3, and wₜ'(1) may be applied to symbols #4 and #5.

According to the present embodiment, the time and frequency resources of the CSI-RS can be increased, and the number of CSI-RS ports can be increased.

### <Embodiment A4>

In Rel. 15, the UE does not assume that the REs of the CSI-RS are the same as the REs of the DMRS. Consequently, flexibility of the configuration of at least one of the CSI-RS and the DMRS decreases.

The CSI-RS may be punctured.

In the present disclosure, puncturing the CSI-RS, the CSI-RS not being mapped to some of time and frequency resources of the CSI-RS, and not transmitting a part of the CSI-RS may be interchangeably interpreted.

In resources to which the CSI-RS is not mapped due to puncture for a certain UE, a signal (for example, a CSI-RS) of another UE may be transmitted.

Puncture may be performed in units of time and frequency resources of a certain size (for example, component resources, resources to which the frequency domain OCC is applied, resources to which the time domain OCC is applied).

The CSI-RS may be transmitted, based on at least one of the following CSI-RS resource control methods 1 to 3.

### <<CSI-RS Resource Control Method 1>>

An NZP-CSI-RS may be punctured in a configured zero power (ZP)-CSI-RS. The NZP-CSI-RS may be mapped to resources out of resources configured for the NZP-CSI-RS, except resources configured for the ZP-CSI-RS.

When at least some of the time and frequency resources of the ZP-CSI-RS and the time and frequency resources of the NZP-CSI-RS overlap, the UE need not receive the NZP-CSI-RS in overlapping REs, need not receive the NZP-CSI-RS in overlapping PRBs, need not receive the ZP-CSI-RS in overlapping REs, need not receive the ZP-CSI-RS in overlapping PRBs, need not assume that the DMRS is configured (or mapped) in overlapping resources, may, when the DMRS is configured (or mapped) in overlapping resources, measure (receive) at least one of the ZP-CSI-RS and the NZP-CSI-RS in the resources, and may, when the DMRS is configured (or mapped) in overlapping resources, measure (receive) the DMRS in the resources.

### <<CSI-RS Resource Control Method 2>>

The UE may be notified of a bitmap indicating locations of puncture of the time and frequency resources of the CSI-RS (for example, at least one location in time and frequency). The bitmap may be included in CSI-RS resources. The UE may puncture the CSI-RS at the locations indicated by the bitmap. The UE may puncture the NZP-CSI-RS or may puncture the ZP-CSI-RS at the locations indicated by the bitmap.

Each bit in the bitmap may correspond to an RE (subcarrier), or may correspond to a PRB. The UE need not receive the NZP-CSI-RS in the REs indicated by the bitmap, or need not receive the NZP-CSI-RS in the PRBs indicated by the bitmap. The UE need not receive the ZP-CSI-RS in the REs indicated by the bitmap, or need not receive the ZP-CSI-RS in the PRBs indicated by the bitmap. The DMRS need not be configured (or mapped) in the resources indicated by the bitmap. The UE need not assume that the DMRS is configured (or mapped) in the resources indicated by the bitmap. The DMRS may be configured (or mapped) in the resources indicated by the bitmap, and the UE may receive or measure the DMRS in the resources indicated by the bitmap.

### <<CSI-RS Resource Control Method 3>>

When the CSI-RS is punctured based on CSI-RS resource control method 1 or 2, the PDSCH need not be transmitted (need not be mapped at the locations of puncture) in the resources to which the CSI-RS is not mapped due to puncture.

In the resources to which the CSI-RS is not mapped due to puncture, the PDSCH may be rate-matched or punctured. The UE may assume that the PDSCH is rate-matched or punctured in the resources.

In the resources to which the CSI-RS is not mapped due to puncture, the PDSCH need not be rate-matched or punctured. The UE may assume that the PDSCH is not rate-matched or punctured in the resources. In the resources to which the CSI-RS is not mapped due to puncture, the PDSCH may be transmitted (the PDSCH may be mapped in the resources).

The UE may be notified of the locations at which the PDSCH is rate-matched or punctured. The locations at which the PDSCH is rate-matched or punctured may be notified as antenna port information, may be notified as a CDM group of the CSI-RS, or may be notified as a subcarrier number (for example, k₀) and a symbol number (for example, l₀).

According to the present embodiment, when the CSI-RS is appropriately punctured and the resources to which the CSI-RS is not mapped due to puncture are appropriately processed, flexibility of the configuration of the CSI-RS can be enhanced.

### <Embodiment A5>

A plurality of groups of CSI-RS resources (CSI-RS resource groups) may be associated with different groups of CSI-RS ports (CSI-RS port groups).

The plurality of CSI-RS resource groups may be grouped by at least one of the following CSI-RS resource grouping methods 1 and 2.

### <<CSI-RS Resource Grouping Method 1>>

Resources of at least one of time and frequency for the CSI-RS may be different among the plurality of CSI-RS resource groups.

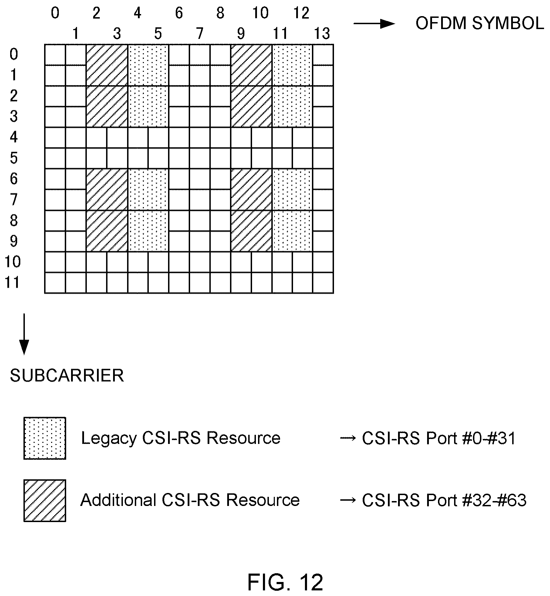

The plurality of CSI-RS resource groups may be multiplexed on each other by at least one of FDM and TDM. For example, as shown in FIG. 12, CSI-RS resource groups #0 and #1 may be TDMed. CSI-RS resource group #0 may be associated with a group of CSI-RS ports #0 to #31, and CSI-RS resource group #1 may be associated with a group of CSI-RS ports #32 to #64. CSI-RS resource group #0 may correspond to the legacy CSI-RS resources, and CSI-RS resource group #1 may correspond to the additional CSI-RS resources.

In the table as in FIG. 1, entries (rows) including a group of additional CSI-RS resources may be added. In the table, entries indicating the number of ports being larger than 32 may be added.

In the table indicating the legacy CSI-RS resources and the additional CSI-RS resources, the additional CSI-RS resources may be added to both of entries indicating the number of ports equal to or less than 32 (low-order number of ports) and entries indicating the number of ports larger than 32 (high-order number of ports), or the additional CSI-RS resources may be added only to the entries indicating the high-order number of ports.

The UE may be configured with the additional CSI-RS resources by higher layer signaling. The UE may be configured with the legacy CSI-RS resources by higher layer signaling, and determine the additional CSI-RS resources by using an offset of at least one of time and frequency. For example, in the example of FIG. 12 described above, the UE may determine the additional CSI-RS resources by adding an offset of -2 symbols to the legacy CSI-RS resources in the time direction.

The plurality of CSI-RS resource groups are orthogonalized by the time and frequency resources, and therefore the UE can perform reception without using new OCCs, and can enhance compatibility with the previous-release UE.

### <<CSI-RS Resource Grouping Method 2>>

At least one of the CSI-RS sequence and the scramble ID for the initial value cᵢₙᵢₜ used for determination of the CSI-RS sequence may be different among the plurality of CSI-RS resource groups.

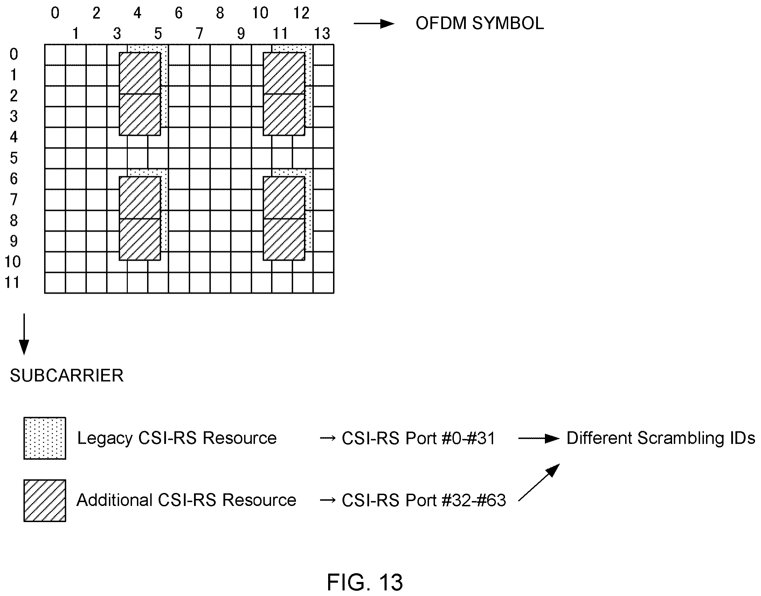

For example, as shown in FIG. 13, CSI-RS resource groups #0 and #1 may be associated with different scramble IDs. CSI-RS resource group #0 may be associated with a group of CSI-RS ports #0 to #31, and CSI-RS resource group #1 may be associated with a group of CSI-RS ports #32 to #64. CSI-RS resource group #0 may correspond to the legacy CSI-RS resources, and CSI-RS resource group #1 may correspond to the additional CSI-RS resources.

Association between at least one of the CSI-RS sequence and the scramble ID and at least one of the CSI-RS resources and the CSI-RS ports may be defined in a specification. For example, the CSI-RS of ports #0 to #X-1 may be determined based on a table (for example, FIG. 1) indicating the legacy CSI-RS resources and cᵢₙᵢₜ defined in a previous release, and the CSI-RS of ports #X to #2X-1 may be determined based on the table and a deformation cᵢₙᵢₜ defined in a new release.

cᵢₙᵢₜ and the deformation cᵢₙᵢₜ may be based on different higher layer parameters (for example, different scramble IDs, scramblingID and scramblingID_2).

The UE may be configured with a scramble ID for cᵢₙᵢₜ (for example, different scramblingID), and calculate the deformation cᵢₙᵢₜ based on the scramble ID by using different operation from cᵢₙᵢₜ. For example, the UE may calculate the deformation cᵢₙᵢₜ by using a value, which is obtained by adding a specific value to the configured scramble ID, for a cᵢₙᵢₜ calculation expression as the scramble ID for the deformation cᵢₙᵢₜ. The specific value may be a cell ID or the like. The UE may calculate the deformation cᵢₙᵢₜ by adding the specific value to the configured scramble ID and performing modulo operation.

In the table indicating the legacy CSI-RS resources and the additional CSI-RS resources, the additional CSI-RS resources may be added to both of entries indicating the number of ports equal to or less than 32 (low-order number of ports) and entries indicating the number of ports larger than 32 (high-order number of ports), or the additional CSI-RS resources may be added only to the entries indicating the high-order number of ports.

The CSI-RS sequence (pseudo-random sequence) has low correlation with other sequences, and thus all or some of the time and frequency resources (for example, the legacy CSI-RS resources) of the CSI-RS associated with low port numbers (for example, numbers smaller than the half of the number of ports) and the time and frequency resources (for example, the additional CSI-RS resources) of the CSI-RS associated with high port numbers (for example, numbers equal to or larger than the half of the number of ports) may overlap.

The UE may be configured with the additional CSI-RS resources by higher layer signaling. The UE may be configured with the legacy CSI-RS resources by higher layer signaling, and determine the additional CSI-RS resources by using an offset of at least one of time and frequency. For example, in the example of FIG. 13 described above, the UE may determine time and frequency resources of an additional CSI-RS by adding an offset of zero symbols to the legacy CSI-RS resources in the time direction and adding an offset of zero PRBs thereto in the frequency direction. The UE may assume that the additional CSI-RS resources fully overlap with the legacy CSI-RS resources in time and frequency.

The plurality of CSI-RS resource groups are distinguished by the CSI-RS sequence, and therefore the UE can perform reception without using new OCCs, and can enhance compatibility with the previous-release UE. Even when the CSI-RS sequence (pseudo-random sequence) is not completely orthogonal, interference between ports can be reduced by applying different precoding (beams) to the ports.

### <Study>

It may be difficult to share the same CSI-RS resources between a legacy CSI-RS (of up to 32 ports of Rel. 15 to Rel. 18, for example) and a new CSI-RS (of more than 32 ports of Rel. 19, for example). The legacy UE cannot de-spread a new TD-OCC/FD-OCC, and thus the base station needs to configure a dedicated set of CSI-RS resources for the legacy (for example, Rel-15 to Rel-18) UE and the new (for example, Rel-19) UE. This causes CSI-RS overhead. When reduction of the CSI-RS overhead is intended, enhancement in performance of more than 23 CSI-RS ports may be limited.

### <Embodiment 1>

A plurality of different CSI-RS resources may use different CSI-RS ports, without introduction of more than 32 ports to the same CSI-RS resources (time and frequency resources). A plurality of CSI-RS resources may be aggregated for the new UE.

For example, two CSI-RS resources may be configured, a first CSI-RS resource may be associated with CSI-RS ports #0 to #31, and a second CSI-RS resource may be associated with CSI-RS ports #32 to #63. In this case, it is easier to share the CSI-RS resources between the legacy UE and the new UE. For example, only the first CSI-RS resource may be configured for the legacy UE, and both of the first CSI-RS resource and the second CSI-RS resource may be configured for the new UE.

According to the present embodiment, through a change in definition of CSI-RS port mapping, more than 32 CSI-RS ports can be defined, and influence on specifications can be reduced.

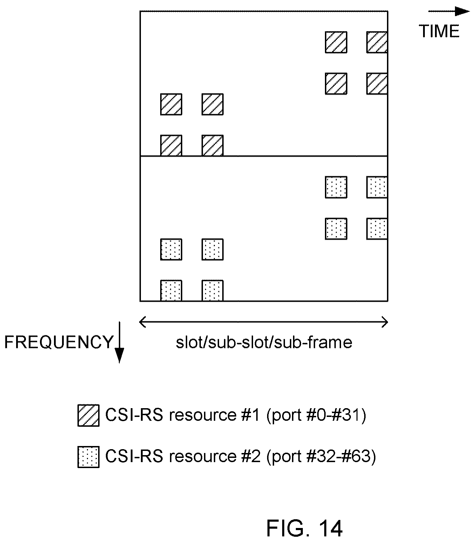

As in the example of FIG. 14, FDMed CSI-RS resource #1 and CSI-RS resource #2 may be configured, CSI-RS resource #1 may be associated with CSI-RS ports #0 to #31, and CSI-RS resource #2 may be associated with CSI-RS ports #32 to #63.

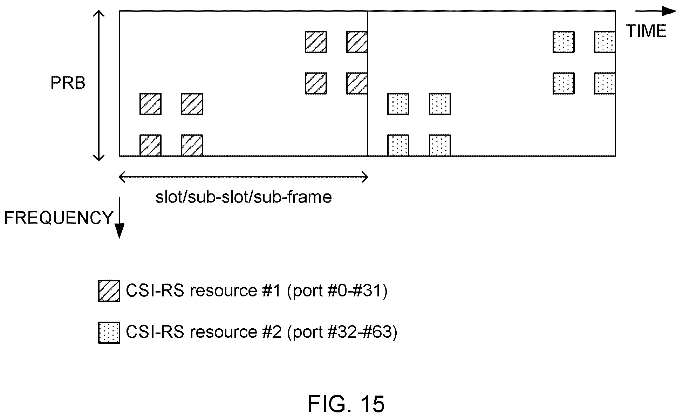

As in the example of FIG. 15, TDMed CSI-RS resource #1 and CSI-RS resource #2 may be configured, CSI-RS resource #1 may be associated with CSI-RS ports #0 to #31, and CSI-RS resource #2 may be associated with CSI-RS ports #32 to #63.

The size of a time resource of each CSI-RS resource may be a slot/sub-slot/subframe. The size of a frequency resource of each CSI-RS resource may be PRB/2^{N} consecutive PRBs (N = -2, -1, 1, 2, ...).

A method of mapping more than 32 CSI-RS ports across a plurality of CSI-RS resources may follow at least one of the following some Embodiments 1-X.

### <<Embodiment 1-1>>

When the UE is configured with a higher layer parameter for enabling more than 32 CSI-RS ports and the UE is configured with x CSI-RS ports and y CSI-RS resources, the UE may map the CSI-RS ports according to at least one of the following some rules. x may be equal to or less than 32.
- A first resource out of y CSI-RS resources (or a CSI-RS resource set) is mapped to CSI-RS ports #0 to #x-1.
- A second resource out of y CSI-RS resources (or a CSI-RS resource set) is mapped to CSI-RS ports #x to #2x-1.
- A third resource out of y CSI-RS resources (or a CSI-RS resource set) is mapped to CSI-RS ports #2x to #3x-1.
- An i-th resource out of y CSI-RS resources (or a CSI-RS resource set) is mapped to CSI-RS ports #(i-1)x to #ix-1. The i-th resource may be a CSI-RS resource corresponding to an i-th time resource (for example, slot), or may be a CSI-RS resource corresponding to an i-th frequency resource (for example, PRB).

### <<Embodiment 1-2>>

A plurality of aggregated CSI-RS resources may be associated with more than 32 CSI-RS ports. Each CSI-RS resource may be associated with 32 or less CSI-RS ports. The plurality of CSI-RS resources for aggregation may follow at least one restriction of the following some options.
- Option 1: The number of CSI-RS resources for aggregation is M. For example, M may be 2.
- Option 2: The number of ports associated with each CSI-RS resource for aggregation is fixed to N, or is larger than O (equal to or larger than O). For example, N may be 32. For example, O may be 16.
- Option 3: The plurality of CSI-RS resources for aggregation are configured in the same CSI-RS resource set or CSI-RS resource group.
- Option 4: The plurality of CSI-RS resources for aggregation have the same configuration of at least one of density, the number of ports, time operation configuration, frequency resource allocation, time resource allocation, QCL assumption, a scrambling ID, and a new scrambling ID. The time operation configuration may indicate P, SP, or AP. The frequency resource allocation may be at a wideband level, or may be at an RB level. The wideband level may be the number of PRBs and a starting PRB. The time resource allocation may be at a slot level. The QCL assumption may be an associated SSB. The plurality of CSI-RS resources for aggregation may have different configurations of at least one of time resource allocation, frequency resource allocation, and a scrambling ID.
- Option 5: The plurality of CSI-RS resources for aggregation may be present in M or less consecutive slots, or may be present in consecutive/comb frequency resources.
- Example: M = 2 CSI-RS resources may be aggregated, and associated with 64 CSI-RS ports. Each CSI-RS resource may be associated with 32 CSI-RS ports. The two CSI-RS resources are present in the same CSI-RS resource set or CSI-RS resource group, have the same frequency resource allocation, and are respectively allocated to two consecutive slots.

### <<Embodiment 1-3>>

In a plurality of aggregated CSI-RS resources having more than 32 ports, some parameters may be additionally configured, or may overwrite existing parameters. For example, such some parameters may be at least one of density, a new scrambling ID, the number of PRBs, and a starting PRB. In order to reduce complexity of UE measurement, density lower than existing density may be configured.

### <Additional Notes>

The UE may acquire CSI by measuring the CSI-RS (resources) using ports to which at least one embodiment described above is applied.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information of at least one of the above-described embodiments.
- supporting of MAC CE based TCI update for a P/SP-CSI-RS.
- supporting of application of a MAC CE based unified TCI state for a P/SP-CSI-RS.
- supporting of MAC CE/DCI based TCI update for a P/SP-CSI-RS.
- supporting of application of a MAC CE/DCI based unified TCI state for a P/SP-CSI-RS.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of operations of the above-described embodiments, any RRC parameter for a specific release (for example, Rel. 18/19), or the like.

The specific information may indicate at least one of the following:
- Single-TRP (sTRP) operation: When there is one indicated TCI state (when no TCI codepoint is mapped to two or more TCI states or two or more CORESET pool indices).
- Single-DCI based multi-TRP (sDCI mTRP) operation: When at least one TCI codepoint is mapped to two or more TCI states.
- Multi-DCI based multi-TRP (mDCI mTRP) operation: When a CORESET pool index is configured.

When not supporting at least one of the specific UE capabilities or not configured with the specific information, the UE may apply operation of Rel. 15/16, for example.

### (Supplementary Note)

Regarding one embodiment of the present disclosure, the following supplementary notes of the invention will be given.

### {Supplementary Note 1}

A terminal including:
a receiving section that receives a configuration of a plurality of channel state information (CSI)-reference signal (RS) resources; and
a control section that measures the plurality of CSI-RS resources by using more than 32 CSI-RS ports, wherein
the plurality of CSI-RS resources are associated with 32 or less different CSI-RS ports.

### {Supplementary Note 2}

The terminal according to supplementary note 1, wherein an i-th CSI-RS resource of the plurality of CSI-RS resources is associated with CSI-RS ports of port numbers (i-1)x to ix-1, where i is an integer of 1 or greater, and x is an integer of 1 or greater and 32 or less.

### {Supplementary Note 3}

The terminal according to supplementary note 1 or 2, wherein the plurality of CSI-RS resources are associated with at least one of a same CSI-RS resource set and a same configured value.

### {Supplementary Note 4}

The terminal according to any one of supplementary notes 1 to 3, wherein at least one of density, a scramble ID different from an existing scramble ID, the number of physical resource blocks (PRBs), and a starting PRB is configured for the plurality of CSI-RS resources.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

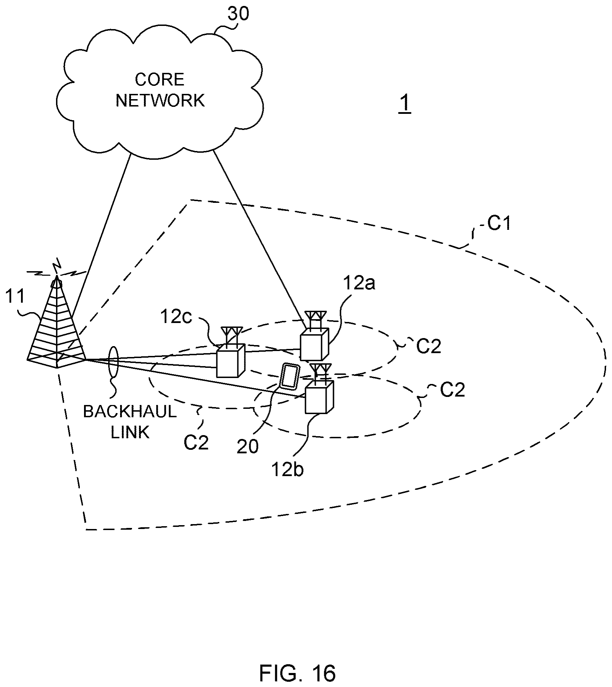

FIG. 16 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

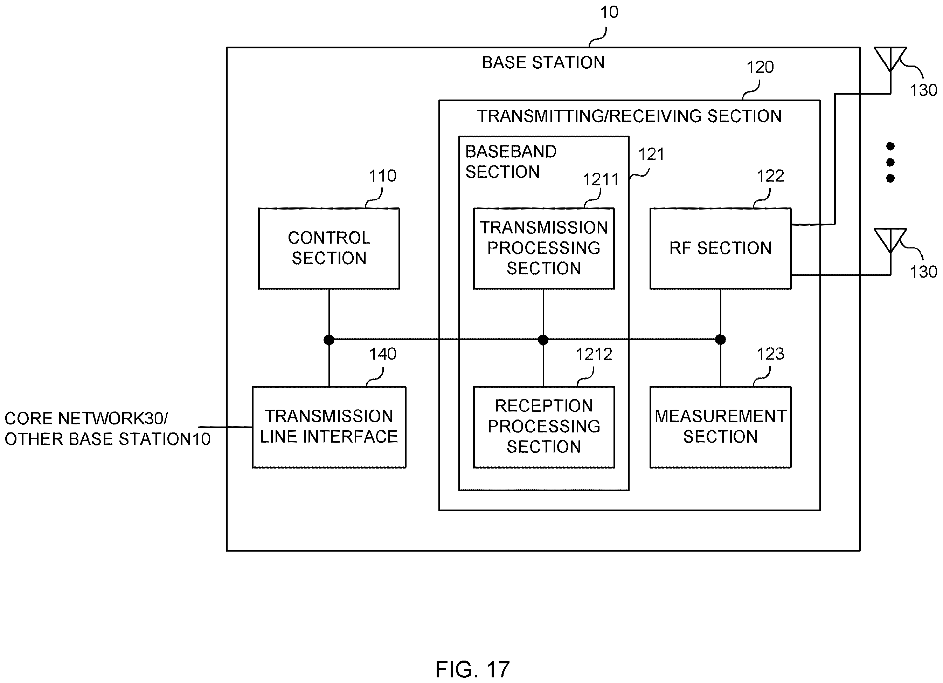

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a configuration of a plurality of channel state information (CSI)-reference signal (RS) resources. The control section 110 may associate the plurality of CSI-RS resources with more than 32 CSI-RS ports. The plurality of CSI-RS resources may be associated with 32 or less different CSI-RS ports.

### (User Terminal)

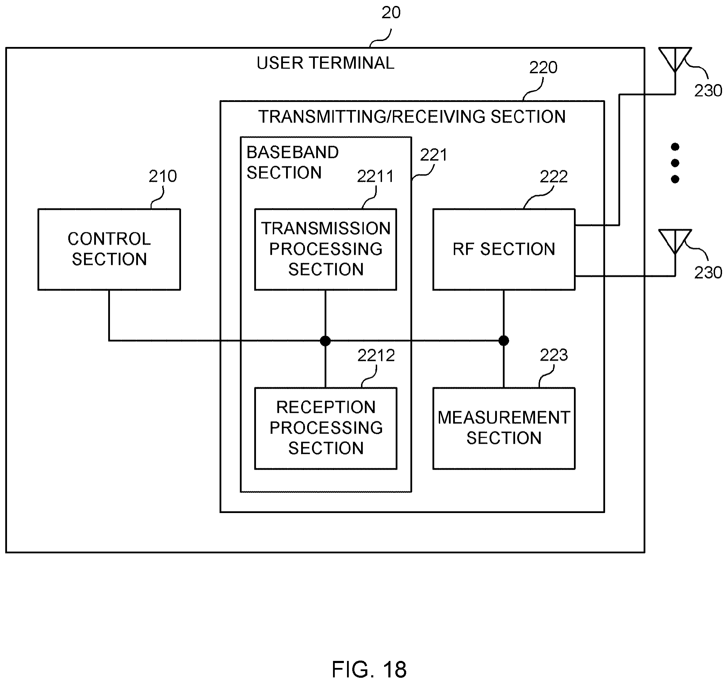

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of a plurality of channel state information (CSI)-reference signal (RS) resources. The control section 210 may measure the plurality of CSI-RS resources by using more than 32 CSI-RS ports. The plurality of CSI-RS resources may be associated with 32 or less different CSI-RS ports.

An i-th CSI-RS resource of the plurality of CSI-RS resources may be associated with CSI-RS ports of port numbers (i-1)x to ix-1, where i is an integer of 1 or greater, and x is an integer of 1 or greater and 32 or less.

The plurality of CSI-RS resources may be associated with at least one of a same CSI-RS resource set and a same configured value.

At least one of density, a scramble ID different from an existing scramble ID, the number of physical resource blocks (PRBs), and a starting PRB may be configured for the plurality of CSI-RS resources.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

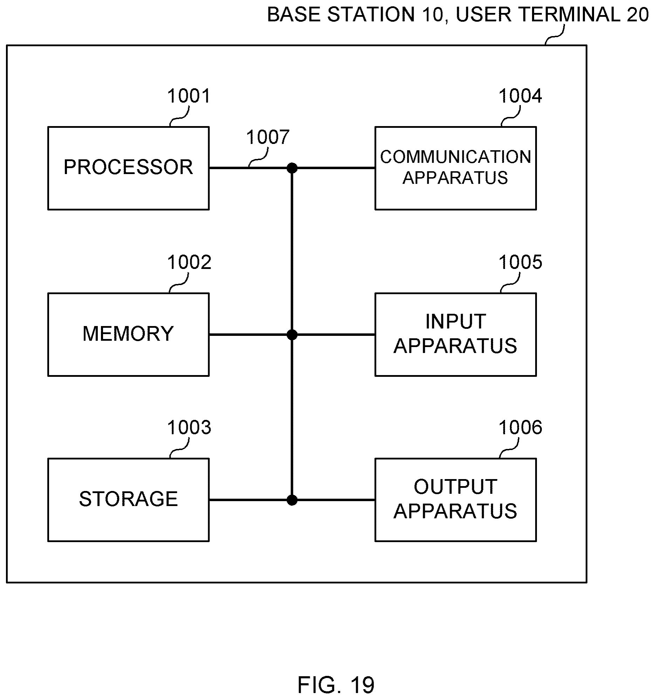

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

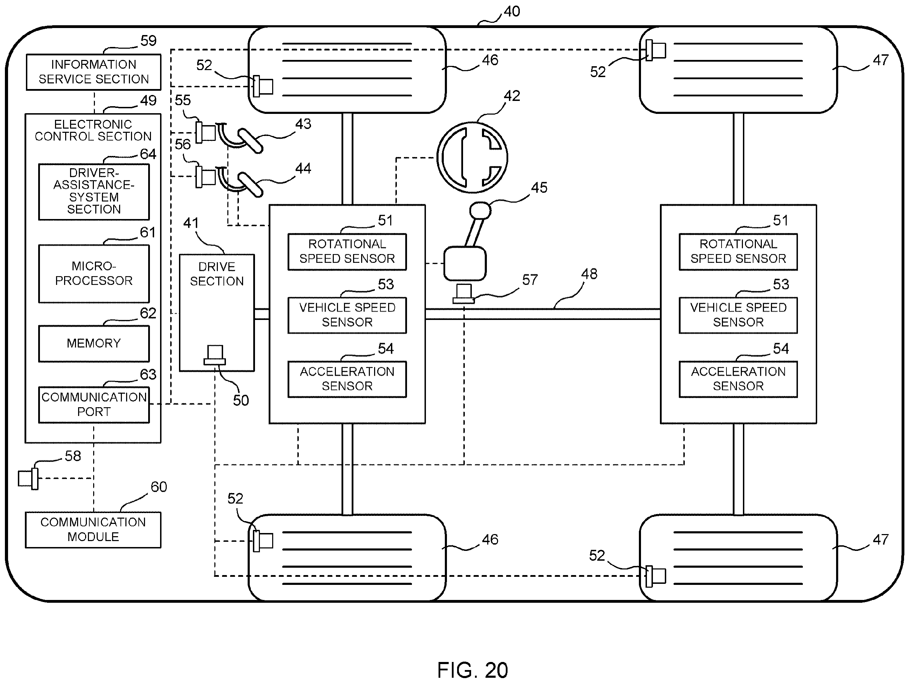

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a configuration of a plurality of channel state information (CSI)-reference signal (RS) resources; and
a control section that measures the plurality of CSI-RS resources by using more than 32 CSI-RS ports, wherein
the plurality of CSI-RS resources are associated with 32 or less different CSI-RS ports.

2. The terminal according to claim 1, wherein
an i-th CSI-RS resource of the plurality of CSI-RS resources is associated with CSI-RS ports of port numbers (i-1)x to ix-1, where i is an integer of 1 or greater, and x is an integer of 1 or greater and 32 or less.

3. The terminal according to claim 1, wherein
the plurality of CSI-RS resources are associated with at least one of a same CSI-RS resource set and a same configured value.

4. The terminal according to claim 1, wherein
at least one of density, a scramble ID different from an existing scramble ID, the number of physical resource blocks (PRBs), and a starting PRB is configured for the plurality of CSI-RS resources.

5. A radio communication method for a terminal, the radio communication method comprising:
receiving a configuration of a plurality of channel state information (CSI)-reference signal (RS) resources; and
measuring the plurality of CSI-RS resources by using more than 32 CSI-RS ports, wherein
the plurality of CSI-RS resources are associated with 32 or less different CSI-RS ports.

6. A base station comprising:
a transmitting section that transmits a configuration of a plurality of channel state information (CSI)-reference signal (RS) resources; and
a control section that associates the plurality of CSI-RS resources with more than 32 CSI-RS ports, wherein
the plurality of CSI-RS resources are associated with 32 or less different CSI-RS ports.
